# EUROPÄISCHE PATENTSCHRIFT

(11) **EP 0 509 399 B1**
(45) Veröffentlichungstag und Bekanntmachung des Hinweises auf die Patenterteilung: **20.03.1996**
(21) Anmeldenummer: 92106159.4
(22) Anmeldetag: 09.04.1992
(51) Int. Cl.: D03D 1/02, B60R 21/16, B60R 21/28

(54) **Gewebe für einen Airbag**
Fabric for airbags
Tissus pour des coussin d'air

(30) Priorität: 15.04.1991 DE 4112229
(43) Veröffentlichungstag der Anmeldung: 21.10.1992
(73) Patentinhaber: HOECHST AKTIENGESELLSCHAFT, D-65926 Frankfurt am Main (DE)
(72) Erfinder: Swoboda, Peter, W-8934 Grossaitingen (DE); Krix, Peter, W-8903 Bobingen 1 (DE)

(56) Entgegenhaltungen:
- EP-A- 0 314 867
- WO-A-90/09295
- GB-A- 1 378 390
- US-A- 3 937 488

## Beschreibung

Die Erfindung betrifft ein Gewebe aus einem synthetischen Garn für einen Airbag, speziell für einen Beifahrer-Airbag, wie er zunehmend als Sicherheitseinrichtung in Kraftfahrzeugen eingesetzt wird.
Ein Airbag hat die Aufgabe, sich bei einer Gefahrensituation durch sehr schnell einströmendes Gas zu einem Ballon zu entfalten, der aufgrund des darin herrschenden Überdrucks den Druck eines dagegengeschleuderten Körpers wirksam aber weich abfangen kann. Dies setzt voraus, das der im Airbag herrschende Überdruck solange erhalten bleibt, bis das Fahrzeug und damit der abzufedernde Körper zum Stillstand gekommen ist. Danach soll der schützende Ballon aber möglichst schnell zusammenfallen, damit er weitere Aktionen der geschützten Person nicht behindert.
Ein Airbag braucht daher eine sehr genau geplante Charakteristik des zeitlichen Druck-Auf-und Abbaus was dadurch erreicht werden kann, daß in eine insgesamt gasundurchlässige Hülle des Airbags voreingestellte Auslaßventile eingebaut sind oder daß ein Teil seiner Hülle, der sogenannte Mantel, gasdicht ist, während die Seitenteile eine geplante Gasdurchlässigkeit aufweisen.

Wie sich aus den oben beschriebenen Anforderungen an einen Airbag ergibt, ist es von entscheidender Bedeutung, daß der gasabführende Teil eines derartigen Airbags eine Kombination bestimmter Eigenschaften, nämlich eine geeignete Gasdurchlässigkeit, ein geringes Gewebegewicht und eine kleine Gewebedicke (für eine platzsparende Unterbringung im Kraftfahrzeug) sowie eine hohe Gewebe-Höchstzugkraft und Höchstzugkraftdehnung (für die Arbeitsaufnahme beim explosionsartigen Entfalten des Airbags) aufweist.

Ein Airbag mit gasabführenden Seitenteilen geplanter Gasdurchlässigkeit ist in der älteren europäischen Patentanmeldung EP-A-0442373 beschrieben worden.
Mit dem dort beschriebenen Airbag werden die Nachteile der bisher in der Praxis eingesetzten Airbags, insbesondere solcher mit beschichteten (gummierten) oder nachgeschrumpften bzw. kalandrierten Geweben, wie sie z.B. aus der DE-OS 23 17 991 und der EP 314 867 bekannt sind, weitgehend vermieden.

Der vorliegenden Erfindung liegt die Aufgabe zugrunde, ein beschichtungsfreies Gewebe aus einem synthetischen Garn für einen Airbag zu schaffen, das sich durch besonders einfache Herstellbarkeit auszeichnet und dennoch die an das Airbag-Material zu stellenden Anforderungen, wie geeignete Gasdurchlässigkeit, niedriges Gewebegewicht, kleine Gewebedicke sowie hohe Gewebefestigkeit und hohe Gewebedehnung hervorragend erfüllt.

Diese Aufgabe wird durch die im Patentanspruch 1 gekennzeichnete Erfindung gelöst.

Die Forderung nach erhöhter Gasdurchlässigkeit ließe sich in einfacher Weise durch eine geringe Fadendichte realisieren, allerdings auf Kosten der Gewebefestigkeit und der Verschiebefestigkeit.

Überraschenderweise hat sich nun ergeben, daß Gewebe mit Kreppbindung oder modifizierter Gerstenkornbindung besonders vorteilhaft für den gasabführenden Teil der Airbags sind.

Gewebe mit Kreppbindung sind bekannt. Sie zeichnen sich dadurch aus, daß die Bindepunkte unregelmäßig über dan ganzen Bindungsrapport verteilt sind, dabei aber in der Regel etwa gleich viele Ketthebungen und -senkungen vorhanden sind und größere Flottierungen fehlen. (Vergleiche z.B. "Bindungslehre für Kleiderstoff- und Tuchweber", Volk und Wissen Volkseigener Verlag Berlin 1955; "Koch-Satlow, Großes Textillexikon", Deutsche Verlagsanstalt Stuttgart 1965)

Eine bevorzugte erfindungsgemäß anzuwendende Kreppbindung weist eine Verdrehung eines Grundbindungs-Rapports einer Bindung um jeweils 90° auf.
Besonders bevorzugt sind Grund-Rapportgrößen von 6 Fäden in Kette und Schuß, sodaß durch ein viermaliges Drehen des Grundbindungsrapports um jeweils 90° ein Bindungsrapport von 12 Fäden in jeder Richtung entsteht.
Die Flottierung der Fäden bewirkt die planbare Gasdurchlässigkeit der Gewebe trotz hoher Gewebedichte und dementsprechend hoher Festigkeit.
Bevorzugt sind Flottierungen über drei Kett- und/oder Schußfäden.

Das erfindungsgemäß einzusetzende Kreppgewebe weist neben den von der Automobilindustrie geforderten anwendungstechnisch relevanten Parametern, Gasdurchlässigkeit, Gewebefestigkeit, Gewebedehnung Weiterreißfestigkeit Flächengewicht und Gewebedicke eine hohe Verschiebefestigkeit und große Diagonaldehnung auf.

Auch Gerstenkornbindungen sind dem Fachmann bekannt.
Allerdings haben sich Gewebe mit normaler Gerstenkornbindung, die in der Regel länger flottierende Kett- und Schußfäden und unterschiedliche Kett-Schußeinbindungen aufweisen, als nicht optimal für den Einsatz als gasabführende Airbag Gewebe erwiesen.
Überraschenderweise ist aber ein Gewebe, das eine modifizierte Gerstenkornbindung, in der jeder kett- bzw. schußrapportierende Faden eine weitgehend identische Einbindung besitzt, d.h. worin die Kett- Schußverkreuzungen möglichst die gleiche Anzahl von Kett-Schußkreuzungspunkten aufweisen, für den Einsatz als gasabführendes Gewebe in Airbag ausgezeichnet geeignet.
Das Gewebe mit der modifizierten Gerstenkornbindung weist eine gute Planlage auf und zeigt ebenfalls die geforderten anwendungstechnisch relevanten Parametern, Gewebefestigkeit, Gewebedehnung Weiterreißfestigkeit Flächengewicht und Gewebedicke und eine hohe Verschiebefestigkeit.
Auch hier ist je nach Bindungsvariante der Gasdurchlaßwert gezielt einstellbar.

Wie sich überraschenderweise gezeigt hat, wird durch die Verwendung dieser Bindungsarten, insbesondere in Verbindung mit dem Einsatz eines feinkapillarigen, vorzugsweise hochfesten, synthetischen Multifilamentgarnes eines Einzeltiters von 4 dtex oder weniger und eines Garntiters im Bereich von 250 bis 550 dtex ohne besondere Gewebenachbehandlung wie Schrumpfen, Thermo-fixieren oder Kalandrieren ein Airbag-Gewebe geschaffen, das ohne Beschichtung und Gummierung die erforderlichen Eigenschaften, insbesondere eine besonders gut einstellbare Luftdurchlässigkeit erreicht. Das erfindungsgemäß ausgebildete Gewebe zeichnet sich somit durch besonders einfache und wirtschaftliche Herstellbarkeit aus. Wegen der fehlenden Gummierung ist die Gefahr einer Versprödung nicht gegeben, was sich entsprechend günstig auf die Lebensdauer auswirkt.

Der Einzeltiter des Garnes kann z. B. 4,0 dtex betragen und ist vorzugsweise sogar kleiner als 3,2 dtex.
Sein Gesamttiter liegt vorzugsweise im Bereich von 280 bis 450 dtex, insbesondere im Bereich von 315 bis 400 dtex.
Vorzugsweise ist das erfindungsgemäß eingesetzte Garn ein Polyestergarn mit einer feinheitsbezogenen Höchstzugkraft von mehr als 60 cN/tex, insbesondere von mehr als 65 cN/tex, und einer Höchstzugkraft-Dehnung von mehr als 15%, insbesondere mehr als 20%.
Gut geeignet für die Herstellung des erfindungsgemäßen Gewebes sind z.B. die handelsüblichen Polyestergarne (R)TREVIRA HOCHFEST der Firma Hoechst AG.

Die besonders vorteilhafte Gasdurchlaßcharakteristik des erfindungsgemäß ausgebildeten Gewebes dürfte insbesondere auf das Zusammenwirken der beschriebenen Bindungsarten mit dem Einsatz der feinkapillarigen Kett- und Schußgarne zurückzuführen sein. Der feine Einzeltiter führt zu einem niedrigen Gewebegewicht und einer kleinen Gewebedicke.

Das Flächengewicht des Gewebes beträgt vorzugsweise weniger als 220 g/m,insbesondere weniger als 190 g/m, beispielweise 177 g/m, während die Gewebedicke vorzugsweise weniger als 0,35mm, besonders bevorzugt weniger als 0,30 mm, insbesondere weniger als 0,26 mm beträgt.

Die Höchstzugkraft des Gewebes beträgt vorzugsweise mehr als 220 daN und die Höchstzugkraftdehnung des Gewebes mehr als 22%, vorzugsweise mehr als 25%, jeweils bezogen auf einen 5 cm breiten Gewebestreifen. Diese Festigkeits- und Dehnungswerte stellen sicher, daß das Gewebe für die Arbeitsaufnahme bei dem explosionsartigen Aufweiten des Airbags geeignet ist.

Um gute mechanische Eigenschaften zu erzielen, sollte das Gewebe eine - für den gewählten Garntiter und die gewählte Gewebekonstruktion - möglichst dichte Gewebeeinstellung besitzen, d.h., daß das Gewebe die beim Weben maximal mögliche Fadenzahl pro Längeneinheit in Kett- und Schußrichtung erhalten soll, beispielsweise werden bei einem 315 dtex Polyestergarn zweckmäßigerweise 23 bis 30 Fäden/cm -beispielsweise 28 Fäden/cm - in Kette und Schuß eingestellt.
Bei niedrigerem Garntiter wird eine entsprechend höhere, bei größeren Garntitern eine entsprechend niedrigere Fadenzahl/cm eingestellt.

Überraschenderweise führten die erfindungsgemäß verwendete Krepp- oder modifizierten Gerstenkornbindung bei gleicher Fadendichte zu einer deutlich höheren Gasdurchlässigkeit als die bekannte Leinwand- oder Kreuzköperbindung. Damit ergeben sich trotz der erforderlichen höheren Gasdurchlässigkeit gute mechanische Eigenschaften, wie z.B. hohe Höchstzugkraft, sehr günstige Dehnbarkeit, hohe Weiterreißfestigkeit und Verschiebefestigkeit.
Darüberhinaus ist es verfahrenstechnisch vorteilhaft, daß die gleichen Kettbäume für die Herstellung der Gewebe des gasdichten und des gasabführenden Teils des Airbags vorgelegt werden können.

In weiterer bevorzugter Ausgestaltung der Erfindung besteht das Gewebe aus gedrehten Kettgarnen und ungedrehten Schußgarnen. Die Drehung der Garne liegt vorzugsweise im Bereich von 110 bis 130/m insbesondere bei etwa 120/m.
Zweckmäßigerweise wird ein ungeschlichtetes Polyestergarn mit einem Thermoschrumpf bei 200°C von weniger als 9 % verwendet.
Wie bereits erwähnt, ist bei dem erfindungsgemäß ausgebildeten Gewebe ein Kettschlichten, Waschen, Thermofixieren, Kalandern und Beschichten nicht erforderlich.

Ein Gegenstand dieser Erfindung ist auch ein Airbag, insbesondere ein solcher, bei dem ein gasdichter und ein gasabführender Gewebeteil vorgesehen sind, wie er insbesondere für den Schutz des Beifahrers vorgesehen wird, der im wesentlichen aus den oben beschriebenen, unbeschichteten und ungummierten und vorzugsweise auch ungeschlichteten und unkalandrierten Geweben aufgebaut ist.

Bei einer bevorzugten Ausführungsform des erfindungsgemäßen Airbags besteht der gasdichte Gewebeteil aus einem Gewebe mit maximal dichter Gewebeeinstellung, insbesondere in Ripstopbindung, wobei vorzugsweise nach je 3 bis 8 mm ein Mehrfachgarn, insbesondere ein Doppelfaden in Kett-und Schußrichtung folgt. Besonders zweckmäßig ist ein Abstand von ca. 4,5 bis 5,5 mm zwischen den Mehrfachgarnen bzw. den Doppelfäden.
Der gasabführende Gewebeteil besteht, wie oben angegeben, aus einem Gewebe, das eine Kreppbindung oder eine modifizierte Gerstenkornbindung aufweist.

Besonders bevorzugte Ausführungsformen des erfindungsgemäßen Gewebes und Airbags sind diejenigen die eine Kombination mehrerer der oben genannten, bevorzugten Merkmale aufweisen.

Die Herstellung des erfindungsgemäßen Gewebes erfolgt nach an sich bekannten Webverfahren und ist dadurch gekennzeichnet, daß ein synthetisches Multifilamentgarn eines Einzeltiters von 4 dtex oder weniger und eines Garntiters im Bereich von 250 bis 550 dtex zu Geweben mit der beschriebenen Krepp- oder modifizierten Gerstenkornbindung verwebt wird.

Vorzugsweise wird ein Polyestergarn mit einer feinheitsbezogenen Höchstzugkraft von mehr als 60 cN/tex insbesondere mehr als 65 cN/tex, und einer Höchstzugkraft-Dehnung von mehr als 15%, vorzugsweise mehr als 20% verwebt.

Weiterhin ist es vorteilhaft, wenn ein ungeschlichtetes Polyestergarn, das einen Thermoschrumpf bei 200°C von weniger als 9 % besitzt, verwebt wird.

Insbesondere wird zur Herstellung eines Gewebes für den gasabführenden Teil ein gedrehtes Kettgarn und ein ungedrehtes Schußgarn verwebt.

Es hat sich ferner als vorteilhaft erwiesen, wenn für das gasdichte Material eine Leinwandbindung 1/1, vorzugsweise aber eine Ripstopbindung, während für das gasabführende Material die oben beschriebenen Bindungen, nämlich eine Kreppbindung oder eine modifizierte Gerstenkornbindung gewebt werden.

Die Herstellung eines erfindungsgemäßen Airbags, bei dem ein gasdichter und ein gasabführender Gewebeteil vorgesehen sind, erfolgt durch Zusammensetzen geeignet zugeschnittener Gewebebahnen in ansich bekannter Weise und ist dadurch gekennzeichnet, daß für den gasdichten Gewebeteil ein Gewebe in z.B. Leinwand- oder Ripstopbindung mit maximal dichter Gewebeeinstellung und für den gasabführenden Gewebeteil ein Gewebe gemäß Anspruch 1 mit einer Krepp- oder modifizierten Gerstenkornbindung eingesetzt wird.

Die Herstellung weiterer, besonders bevorzugter Ausführungsformen des erfindungsgemäßen Airbags erfolgt durch Verwendung von oben beschriebenen Geweben mit einer Kombination bevorzugter Eigenschaften, beispielweise durch Einsatz eines gasdichten Mantelgewebes mit Ripstopbindung und eines gasabführenden Gewebes mit einer Krepp- oder modifizierten Gerstenkornbindung.

### Beispiel

Zur Herstellung eines unbeschichteten Gewebes für einen Beifahrer-Airbag wurde ein Polyesterfilamentgarn TREVIRA HOCHFEST 315 dtex f100 verwendet.
A) Als Gewebekonstruktion für den gasundurchlässigen Mittelteil (Mantel) des Air-bags wurde eine Ripstopbindung gewählt. Die Gewebeeinstellung betrug sowohl in der Kette wie auch im Schuß 28 Fäden/cm.
Die Daten des Rohgewebes waren:

| | |
|---|---|
| Kettgarn | 315 dtex f100 VZ120 |
| Schußgarn | 315 dtex f100 VO |
| Bindung | Ripstop |
| Einstellung [Fäd/cm] | 28 / 28 |
| Flächengewicht | 197 g/m |
| Gewebedicke | 0,30 mm |
| | |
| Höchstzugkraft (gemessen an einem 5 cm breiten Gewebestreifen) | 273 daN (Kette) |
| | 285 daN (Schuß) |
| | |
| Höchstzugkraft-Dehnung (gemessen an einem 5 cm breiten Gewebestreifen) | 32 % (Kette) |
| | 29 % (Schuß) |
| | |
| Weiterreißfestigkeit | 14 daN (Kette) |
| nach DIN 53356, Auswertung | 14 daN (Schuß) |
| nach DIN 53539B | |
| | |
| Luftdurchlässigkeit | 2,7 l dm⁻ min⁻¹ bei 50mm WS |

Dieses, aus den ungeschlichteten Polyestergarnen bestehende Gewebe wurde ohne Ausrüstung und ohne Kalandrierung hergestellt und mit keinerlei Beschichtung versehen und im gasdichten Teil eines Airbags eingesetzt.
B) Für den gasabführenden Teil des Airbags wurde ein Gewebe mit folgender Gewebekonstruktion verwendet:

| | |
|---|---|
| Kettgarn | 315 dtex f100 VZ120 |
| Schußgarn | 315 dtex f100 VO |
| Bindung | Kreppbindung |
| Einstellung [Fäd/cm] | 28 / 26 |

Die Daten des Rohgewebes des gasabführenden Airbag-Teils waren:

| | |
|---|---|
| Flächengewicht: | 182 g/m |
| Gewebedicke: | 0,29 mm |
| | |
| Höchstzugkraft: (5 cm breiter Gewebestreifen) | 275 daN (Kette) |
| | 246 daN (Schuß) |
| | |
| Höchstzugkraft-Dehnung: (5 cm breiter Gewebestreifen) | 24 % (Kette) |
| | 22 % (Schuß) |
| | |
| Weiterreißfestigkeit | 18 (Kette) |
| nach DIN 53356, Auswertung | 18 (Schuß) |
| nach DIN 53539B | |
| | |
| Luftdurchlässigkeit: | 62 l dm⁻ min⁻¹ bei 50mm WS |

Wie ersichtlich, wurde bei dem Gewebe des gasabführenden Airbagteils anstelle einer Ripstopbindung eine Kreppbindung benutzt bei fast gleicher Fadendichte. Hierdurch ergab sich eine Erhöhung der Luftdurchlässigkeit von 2,7 auf 62 l.dm⁻.min⁻¹ bei 50mm WS.

Zu einem ähnlichen überraschend guten Ergebnis gelangt man, wenn man bei der Herstellung des gasabführenden Seitenteils ein Gewebe mit folgenden Daten einsetzt.

| | |
|---|---|
| Kettgarn | 315 dtex f100 VZ120 |
| Schußgarn | 315 dtex f100 VO |
| Bindung | mod. Gerstenkornbindung |
| Einstellung [Fäd/cm] | 28 / 26 |

Die Daten des Rohgewebes des gasabführenden Airbag-Teils waren:

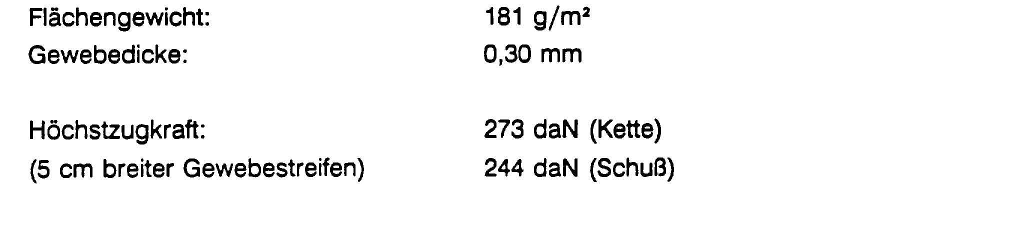

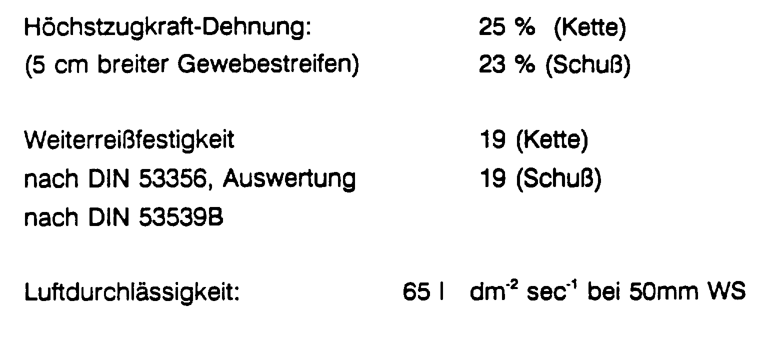

## Patentansprüche

1. Gewebe für den gasabführenden Teil eines Airbags aus synthetischem Garn, das beschichtungsfrei ausgebildet ist, aus einem synthetischen hochfesten Multifilamentgarn eines Einzeltiters von 4 dtex oder weniger und eines Garntiters im Bereich von 250 bis 550 dtex besteht, wobei es eine Krepp- oder modifizierte Gerstenkornbindung, wobei bei der letztgenannten Bindung jeder kett- bzw. schußrapportierende Faden eine identische Einbindung besitzt und die Kett/Schuß-Verkreuzungen die gleiche Anzahl von Kett/Schuß-Kreuzungspunkten aufweisen, aufweist.

2. Gewebe nach Anspruch 1, dadurch gekennzeichnet, daß das synthetische hochfeste Multifilamentgarn ein Polyestergarn ist, das eine feinheitsbezogene Höchstzugkraft von mehr als 60 cN/tex und eine Höchstzugkraft-Dehnung von mehr als 15 % besitzt.

3. Gewebe nach einem der vorhergehenden Ansprüche, dadurch gekennzeichnet, daß das Polyestergarn einen Thermoschrumpf bei 200°C von weniger als 9 % besitzt.

4. Gewebe nach einem der vorherigen Ansprüche, dadurch gekennzeichnet, daß das Polyestergarn schlichtefrei ist.

5. Gewebe nach Anspruch 1 für den gasdichten und gasabführenden Teil eines Airbags, dadurch gekennzeichnet, daß dieses Gewebe aus gedrehten Kettgarnen und ungedrehten Schußgarnen besteht.

6. Gewebe nach Anspruch 5, dadurch gekennzeichnet, daß die Drehung der Kettgarne im Bereich von 110 - 130/m liegt.

7. Gewebe nach einem der vorhergehenden Ansprüche, dadurch gekennzeichnet, daß es ein Flächegewicht von weniger als 220 g/m und eine Gewebedicke von weniger als 0,35 mm besitzt.

8. Gewebe nach einem der vorhergehenden Ansprüche, dadurch gekennzeichnet, daß eine Höchstzugkraft von mehr als 220 daN und eine Höchstzugkraftdehnung von mehr als 22 %, beides gemessen an einem 5 cm breiten Gewebestreifen, besitzt.

9. Airbag, bei dem ein gasdichter und ein gasabführender Gewebeteil vorgesehen sind, wobei der gasabführende Gewebeteil aus einem Gewebe in Krepp- oder modifizierter Gerstenkornbindung, wobei bei der letztgenannten Bindung, jeder kett- bzw. schußrapportierende Faden eine identische Einbindung besitzt und die Kett/Schuß-Verkreuzungen die gleiche Anzahl von Kett/Schuß-Kreuzungspunkten aufweisen, besteht.

10. Airbag gemäß Anspruch 9, dadurch gekennzeichnet, daß der gasabführende Gewebeteil aus einem Gewebe besteht, dessen Gewebeeinstellung um 10 bis 25 % niedriger als die des gasdichten Gewebeteils ist.

11. Verfahren zur Herstellung eines Gewebes für den gasabführenden Teil eines Airbags, das beschichtungsfrei ausgebildet ist, wobei ein synthetisches Garn aus einem synthetischen, hochfesten Multifilamentgarn eines Einzeltiters von weniger als 4 dtex und eines Garntiters im Bereich von 250 bis 550 dtex verwebt wird, wobei das Gewebe aus einer Krepp- oder modifizierten Gerstenkornbindung, wobei bei der letztgenannten Bindung jeder kett- bzw. schußrapportierenden Faden eine identische Einbindung besitzt und die Kett-/Schuß-Verkreuzungen die gleiche Anzahl von Kett-/Schuß-Verkreuzungspunkten aufweisen, aufgebaut wird.

12. Verfahren nach Anspruch 11, dadurch gekennzeichnet, daß ein Polyestergarn mit einer feinheitsbezogenen Höchstzugkraft von mehr als 60 cN/tex und einer Höchstzugkraft-Dehnung von mehr als 15 % verwebt wird.

13. Verfahren nach Anspruch 11, dadurch gekennzeichnet, daß ein Polyestergarn, das einen Thermoschrumpf bei 200°C von weniger als 9 % besitzt, verwebt wird.

14. Verfahren nach Anspruch 11 zur Herstellung eines Gewebes für den gasabführenden Teil eines Airbags, bei dem ein gasdichter und ein gasabführender Gewebeteil vorgesehen sind, dadurch gekennzeichnet, daß ein gedrehtes Kettgarn und ein ungedrehtes Schußgarn verwebt wird.

15. Verfahren zur Herstellung eines Airbags, bei dem ein gasdichter und ein gasabführender Gewebeteil vorgesehen sind, durch Zusammensetzen geeignet zugeschnittener Gewebebahnen in ansich bekannter Weise wobei für den gasdichten Gewebeteil ein Gewebe mit maximal dichter Gewebeeinstellung und für den gasabführenden Gewebeteil ein Gewebe aus synthetischem Garn, das beschichtungsfrei ausgebildet ist, aus einem synthetischem hochfesten Multifilamentgarn eines Einzeltiters von 4 dtex oder weniger und eines Garntiters im Bereich von 250 bis 550 dtex besteht, wobei das gasabführende Gewebeteil durch eine Krepp- oder modifizierte Gerstenkornbindung aufgebaut wird und die letztgenannte Bindung kett- bzw. schußrapportierende Fäden mit einer identischen Einbindung und Kett/Schuß-Verkreuzungen mit der gleichen Anzahl von Kett/Schuß-Kreuzungspunkten aufweist, eingesetzt wird.

## Claims

1. A fabric for the gas-releasing part of an airbag, made without coating from a synthetic yarn comprising a synthetic high-tenacity multifilament yarn having a filament linear density of 4 dtex or less and a yarn count within the range from 250 to 550 dtex in a crepe weave or a modified huckaback weave in which every warp and weft repeat yarn follows the same method of interlacing and the warp-weft crossings have the same number of warp-weft crossing points.

2. The fabric of claim 1, characterized in that the synthetic high-tenacity multifilament yarn is a polyester yarn which has a tenacity of more than 60 cN/tex and a breaking extension of more than 15%.

3. The fabric of either of the preceding claims, characterized in that the polyester yarn has a hot air shrinkage at 200°c of less than 9%.

4. The fabric of any one of the preceding claims, characterized in that the polyester yarn is size-free.

5. The fabric of claim 1 for the gastight and gas-releasing part of an airbag, characterized in that the fabric consists of twisted warp yarns and untwisted weft yarns.

6. The fabric of claim-5,- characterized in that the warp yarn twist is within the range 110 - 130 turns/m.

7. The fabric of any one of the preceding claims, characterized in that it has a basis weight of less than 220 g/m and a thickness of less than 0.35 mm.

8. The fabric of any one of the preceding claims, characterized in that it has a breaking strength of more than 220 daN and a breaking extension of more than 22%, both measured on a 5 cm wide fabric strip.

9. An airbag with a gastight and a gas-releasing fabric part, wherein the gas-releasing fabric part consists of a fabric in a crepe weave or a modified huckaback weave in which every warp and weft repeat yarn follows the same method of interlacing and the warp-weft crossings have the same number of warp-weft crossing points.

10. The airbag of claim 9, characterized in that the gas-releasing fabric part consists of a fabric whose set is from 10 to 25% lower than that of the gastight fabric part.

11. A process for manufacturing an uncoated fabric for the gas-releasing part of an airbag by weaving a synthetic, high-tenacity multifilament yarn having a filament linear density of less than 4 dtex and a yarn count within the range from 250 to 550 dtex in a crepe weave or a modified huckaback weave in which every warp and weft repeat yarn follows the same method of interlacing and the warp-weft crossings have the same number of warp-weft crossing points.

12. The process of claim 11, characterized in that the synthetic high-tenacity multifilament yarn is a polyester yarn which has a tenacity of more than 60 cN/tex and a breaking extension of more than 15%.

13. The process of claim 11, characterized in that the polyester yarn used has a hot air shrinkage at 200°c of less than 9%.

14. The process of claim 11 for manufacturing a fabric for the gas-releasing part of an airbag having a gastight and a gas-releasing fabric part, characterized in that a twisted warp yarn and an untwisted weft yarn are used.

15. A process for manufacturing an airbag having a gas-tight and a gas-releasing fabric part by joining together suitably trimmed lengths of fabric in a conventional manner by using for the gastight fabric part a woven fabric with a set of maximum tightness and for the gas-releasing fabric part a fabric made without coating from a synthetic yarn comprising a synthetic high-tenacity multifilament yarn having a filament linear density of 4 dtex or less and a yarn count within the range from 250 to 550 dtex in a crepe weave or a modified huckaback weave in which warp and weft repeat yarns follow the same method of interlacing and warp-weft crossings have the same number of warp-weft crossing points.

## Revendications

1. Tissu pour la partie évacuant les gaz d'un air-bag en filé synthétique qui est formé sans enduit, en filé multifilament très solide synthétique, ayant un titre unitaire de 4 dtex ou moins, et un titre du filé dans le domaine de 250 à 550 dtex, présentant une armure crêpe ou une armure grain d'orge modifiée, pour cette dernière chaque fil de rapport de chaîne ou bien de trame ayant un liage identique et les croisements chaîne/trame présentant le même nombre de points de liage chaîne/trame.

2. Tissu selon la revendication 1, caractérisé en ce que le filé multifilament synthétique très solide est un filé de polyester qui a une résistance à la rupture maximale, rapportée à la finesse, supérieure à 60 cN/tex et un allongement à la rupture maximal supérieur à 15 %.

3. Tissu selon l'une des revendications précédentes, caractérisé en ce que le filé de polyester a un retrait thermique à 200 °C inférieur à 9 %.

4. Tissu selon l'une des revendications précédentes, caractérisé en ce que le filé de polyester n'est pas encollé.

5. Tissu selon la revendication 1 pour la portion imperméable aux gaz et la portion évacuant les gaz d'un air-bag, caractérisé en ce que ce tissu est constitué de filés de chaîne tordus et de filés de trame non tordus.

6. Tissu selon la revendication 5, caractérisé en ce que la torsion des filés de chaîne se trouve dans le domaine de 110 à 130/m.

7. Tissu selon l'une des revendications précédentes, caractérisé en ce que la masse surfacique est inférieure à 220 g/m et l'épaisseur du tissu est inférieure à 0,35 mm.

8. Tissu selon l'une des revendications précédentes, caractérisé en ce qu'il a une résistance à la rupture maximale supérieure à 220 daN et un allogement à la rupture maximal supérieur à 22 %, les deux mesurées sur une bande de tissu d'une largeur de 5 cm.

9. Air-bag comportant une portion de tissu imperméable aux gaz et une portion de tissu évacuant les gaz, la portion de tissu évacuant les gaz étant en un tissu ayant une armure crêpe ou une armure grain d'orge modifiée, dans cette dernière dernière chaque fil de rapport de chaîne ou bien de trame ayant un liage identique et les croisements de chaîne/trame présentant le même nombre de points de liage chaîne/trame.

10. Air-bag selon la revendication 9, caractérisé en ce que la portion de tissu évacuant les gaz est constituée d'un tissu dont la densité de tissu est de 10 à 25 % inférieure à celle de la portion de tissu imperméable aux gaz.

11. Procédé pour la préparation d'un tissu pour la portion évacuant les gaz d'un air-bag formé non enduit en tissant un filé synthétique d'un filé multifilament synthétique très solide ayant un titre unitaire inférieur à 4 dtex et un titre de filé dans le domaine de 250 à 550 dtex, le tissu ayant une armure crêpe ou une armure grain d'orge modifiée, dans cette dernière chaque fil de rapport de chaîne ou bien de trame ayant un liage identique et les croisements chaîne/trame présentant le même nombre de points de croisement chaîne/trame.

12. Procédé selon la revendication 11, caractérisé en ce qu'on tisse un filé de polyester ayant une résistance à la rupture maximale, rapportée à la finesse, supérieure à 60 cN/tex et un allongement à la rupture maximal supérieur à 15 %.

13. Procédé selon la revendication 11, caractérisé en ce qu'on tisse un filé de polyester ayant un retrait thermique à 200 °C et inférieur à 9 %.

14. Procédé selon la revendication 11 pour la préparation d'un tissu pour la portion évacuant les gaz d'un air-bag pour laquelle on prévoit une portion de tissu imperméable aux gaz et une portion de tissu évacuant les gaz, caractérisé en ce que l'on tisse un filé de chaîne tordu et un filé de trame non tordu.

15. Procédé pour la préparation d'un air-bag dans lequel on prévoit une portion de tissu imperméable aux gaz et une portion de tissu évacuant les gaz, en réunissant des bandes de tissu coupées de façon appropriée, de façon connue en soi, en utilisant pour la portion de tissu imperméable aux gaz un tissu ayant un réglage de la densité de fils maximal et pour la portion de tissu évacuant les gaz un tissu en fils synthétiques formé sans enduit, en un filé multifilament synthétique très solide, ayant un titre unitaire de 4 dtex ou inférieur et un titre du filé dans le domaine de 250 à 550 dtex, la portion de tissu évacuant les gaz étant constituée d'une armure crêpe ou armure grain d'orge modifiée et cette dernière ayant des fils de rapport de chaîne ou bien de trame avec un liage identique, et les croisements de chaîne/trame ayant le même nombre de points de croisement chaîne/trame.
